# EUROPEAN PATENT SPECIFICATION

(11) **EP 1 478 895 B1**
(45) Date of publication and mention of the grant of the patent: **15.04.2009**
(21) Application number: 03704722.2
(22) Date of filing: 25.02.2003
(51) Int. Cl.: F28D 7/10, F28B 9/08

(54) **HEAT EXCHANGER ARRANGEMENT AND A METHOD USED IN A HEAT EXCHANGER**
WÄRMETAUSCHERANORDNUNG UND BEI EINEM WÄRMETAUSCHER VERWENDETE ANORDNUNG
SYSTEME D'ECHANGEUR THERMIQUE ET PROCEDE UTILISE DANS UN ECHANGEUR THERMIQUE

(30) Priority: 26.02.2002 FI 20020366; 26.02.2002 FI 20020365
(43) Date of publication of application: 24.11.2004
(73) Proprietor: Wärtsilä Finland Oy, 65380 Vaasa (FI)
(72) Inventor: HÄGGLUND, Thomas, FIN-65410 Sundom (FI)
(74) Representative: Zipse Habersack Kritzenberger
(86) International application number: PCT/FI2003/000132
(87) International publication number: WO 2003/073031

(56) References cited:
- EP-A1- 0 031 919
- DE-A- 1 805 150
- DE-A1- 10 146 394
- GB-A- 1 331 202
- GB-A- 1 407 018
- GB-A- 2 009 385
- US-A- 1 782 435
- US-A- 2 134 058
- US-A- 2 248 909
- US-A- 2 520 825
- US-A- 2 937 855

## Description

The present invention relates to a heat exchanger arrangement as set forth in the preamble of claim 1, known from US-A-2 937 855, the apparatus comprising a shell flow arrangement for a first heat transfer medium, a channel flow arrangement for a second heat transfer medium, arranged to be at least partially enveloped by the shell flow arrangement, wherein the channel flow arrangement comprises a first part and a second part, in which the heat transfer medium flow directions are approximately opposite to each other. The present invention relates also to a method of condensing condensable components from hot gases, which includes a heat exchanger arrangement according to any of claims 1 to 8, according to preamble of claim 11.

It is known per se that both particle emissions and, for example, sulphur oxide emissions into the atmosphere can be reduced by condensing combustion gases. The condensable components can be condensed by sufficiently cooling the exhaust gases. A number of solutions have previously been suggested for this purpose. Publication DE 3440266 discloses a solution, in which a heat exchanger has been arranged inside the exhaust gas duct for cooling the gas. This solution is, however, problematic, as the heat exchanger located in the gas stream may be prone to corrosion and clogging.

It is an aim of the present invention to produce a heat exchanger arrangement minimising the problems associated with prior art. It is also an aim of the present invention to produce a method of efficiently and reliably condensing condensable components. It is a special aim of the invention to produce a heat exchanger arrangement for exhaust gases of an internal combustion engine, in which the risk of corrosion and clogging is minimised and the cleaning efficiency of the exhaust gases of an internal combustion engine is improved.

Aims of the invention are mainly achieved as disclosed in the appended claims 1 and 11 and more closely explained in other claims.

A heat exchanger arrangement according to the invention comprises a shell flow arrangement for a first heat exchange medium, a channel flow arrangement for a second heat transfer medium arranged to be at least partially enveloped by the shell flow arrangement. The channel flow arrangement comprises a first part and a second part, in which parts the flow directions of the heat transfer medium are approximately opposite to each other. The first part of the channel flow arrangement comprises an outer shell at least partially enveloped by the shell flow arrangement and the second part comprises an inner shell arranged at least a partially inside the first part.

The first part and the second part are in flow connection with each other so that the second heat transfer medium can first flow via the first part and thereafter via the second part. This will produce both a compact design and the desired function, in which the second heat transfer medium is warmed as it flows via the second part. Preferably the first part and the second part are formed by concentrically arranged tubes.

This way the heat exchanger arrangement may be constructed to be such that the channel flow arrangement is essentially free of internal heat exchanger elements. In practise, cooling and re-heating of the second heat transfer medium is effected only through the walls of the first and second part of the channel flow arrangement.

The channel flow arrangement preferably extends through the shell flow arrangement and consists of a number of units consisting of first and second parts connected in parallel.

A first header chamber of the second heat transfer medium is arranged on the first side of the shell flow arrangement, the header comprising a medium inlet conduit, and the first part of each channel flow arrangement is in flow connection with the first header chamber by its first end. In addition to this, a second header chamber of the second heat transfer medium is arranged on the first side of the shell flow arrangement, the header comprising a medium outlet conduit, and the second part of each channel flow arrangement is in flow connection with the second header chamber by its one end.

On the second side of the shell flow arrangement is a space to which the first part is connected by its second end and the second part by its first end, the said space comprising at least one outlet conduit for removing the liquid condensed from the heat transfer medium. According to the invention, the first and the second header chambers are arranged next to each other, and the second part of each channel flow arrangement is arranged to extend through the first chamber. This way, the connections for the second heat transfer medium can be arranged on the same side of the heat exchanger.

Flow guides are arranged in the space between the outer shell and the inner shell of the channel flow arrangement for causing the flow of the heat transfer medium to rotate around the longitudinal axis of the inner shell. The above described heat transfer arrangement is very suitable for cleaning of exhaust gases of a piston engine subjected to production of power.

In a method of condensing condensable components from hot gases in a heat exchanger according to the invention, the method comprising a shell flow arrangement and a channel flow arrangement enveloped by the shell flow arrangement, the hot gas is arranged to flow essentially downwards in the channel flow arrangement in the space between the outer shell and the inner shell thereof, simultaneously transferring heat through the shells so that condensation is effected, subsequent to which the flow direction of the by now partially cooled gas is changed about 180°, whereby the condensed components are separated from the gas flow. Further, gas is caused to flow essentially upwards in the space inside the inner shell, whereby it is simultaneously warned by receiving heat from the hot gas.

Hot gas is preferably caused to flow essentially downwards in the channel flow arrangement, in the space between the outer shell and the inner shell, while simultaneously transferring heat to both the shell flow and the already partially cooled gas flow in the space inside the inner shell. Subsequent to changing the flow direction of the gas, and after liquid has been separated therefrom, gas is caused to flow essentially upwards in the space inside the inner shell, while simultaneously receiving heat from the hot gas flowing essentially downwards in the channel flow arrangement, in the space formed by the outer shell and the inner shell thereof. By means of this arrangement, the gases are first caused to cool so that there is a desired amount of condensation, and further to heat up to the extent that there is no more condensation to an undesired degree. Further, it possible to ensure by means of this arrangement that the temperature of the gases elevates to a level sufficient to cause the gases to rise up, instead of being spread to the close proximity of the plant. This can be achieved without a separate heat source.

According to a specific aspect of the invention beneficial results may be achieved particularly in connection with large piston engine. According to this aspect water is added into the charge of the engine while the engine is running, thus producing vapour-containing exhaust gas. In the method, the vapour-containing exhaust gas is cooled so that the vapour contained therein is condensed and the solid particles contained by the exhaust gas are made to adhere to the condensed water according to the invention. Preferably water is injected into the combustion air or directly to cylinders of the engine. This way the exhaust gas contains more vapour than the amount of vapour generated in the combustion process, and respectively the amount of vapour condensed from the exhaust gases of the engine is larger than the amount of water generated in the fuel combustion process.

Preferably, humid, vapour-containing exhaust gas is cooled by essentially simultaneously transferring heat to a cooling medium and the already cooled exhaust gas. This causes the temperature of the exhaust gas to rise, ensuring that the exhaust gas rises upwards as it is released into the atmosphere from, for example, a smokestack. Further, according to the invention, this is achieved essentially without additional external energy.

Several benefits are achieved by the invention. The solution is very compact and it can significantly reduce the exhaust gas emissions. Further, separation of condensed liquid is efficient without excessive pressure losses. A solution according to the invention does not foul easily, either, and it is easy to keep clean.

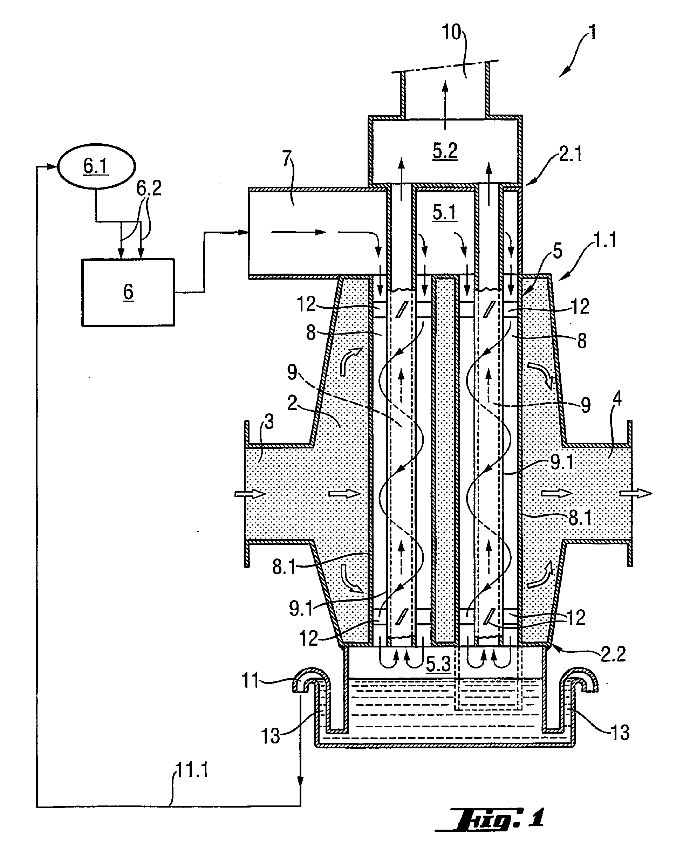

In the following, the invention is disclosed by way of an example, with reference to the appended drawing, in which figure 1 is a schematic illustration of an embodiment of a heat exchanger arrangement in connection with a piston engine plant according to the invention.

The piston engine plant 1 schematically comprises piston engine 6 and heat exchanger arrangement 1.1 in connection with the exhaust gas channel of the piston engine plant. The piston engine can be an engine known as such. The heat exchanger arrangement 1.1 comprises a shell flow arrangement 2, with the first heat transfer medium arranged to flow therein. The first heat transfer medium acts in this case as a heat receiving medium and it can be, for example, water or air. The shell flow arrangement comprises inlet conduit 3 and outlet conduit 4, through which the first heat transfer medium can be directed via the shell flow arrangement.

The heat exchanger arrangement 1.1 also comprises the channel flow arrangement 5 for the second heat transfer medium, which is enveloped by the shell flow arrangement. In the illustrated embodiment the second heat transfer medium is exhaust gas of the piston engine 6. It should be understood that the plant may also include other equipment in the gas flow between the engine 6 and the heat exchanger arrangement 1.1. A number of various undesired components are generated in the combustion process of the piston engine 6, the amount of which it is advantageous to minimise. These include, e.g. particle emissions, such as soot, and gaseous emissions, such as sulphur compounds. According to the invention, the piston engine 6 is provided with suitable water injection means 6.2 for introducing water or steam into the engine 6. Water can be introduced into the engine in different stages, such as into the engine intake air or directly into the cylinder 6.2 of the engine. Water is introduced from a water source 6.1, in such a way, however, that water is injected into each cylinder of the engine 6, at the latest. Water can be injected as a liquid, steam or a fuel-water emulsion or a combination of these as desired. Thus, the method enables the humidity of the exhaust gases of the engine 6 to be increased above the level achieved by the fuel combustion process alone. This way the amount of condensable water in the exhaust gases is higher than normally. The amount of the injected water can be controlled e.g. on the basis of exhaust gas temperature by means of maintaining the amount of injected water such that the exhaust gas temperature is a desired lower level compared to situation where water is not injected. When the water condenses into liquid, solid particles adhere on the surfaces of the liquid and liquid drops condensing on the surfaces of the apparatus. As water is injected into the engine in addition to the water generated in combustion, solid particles are also separated more efficiently.

Hot and vapour-containing exhaust gas is directed from the piston engine 6 to the inlet conduit 7 and further through the heat exchanger arrangement 1.1. The inlet conduit 7 is arranged in the first header chamber 5.1 of the channel flow arrangement 5. The first header chamber 5.1 directs hot exhaust gas from the piston engine 6 to each of the channel flow arrangement 5 assemblies, connected in parallel. This kind of assembly comprises a first part 8 and a second part 9. The first part comprises the outer shell 8.1 enveloped by the shell flow arrangement, preferably a tube having a circular cross-section, the tube being in the following called the outer tube. The outer tube 8.1 extends through the shell flow arrangement 2 from its first side 2.1 to the second side 2.2. Another tube, acting as an internal shell 9.1, is arranged inside the tube 8.1, the tube being in the following called inner tube. The outer tube is in flow connection with the header chamber 5.1, whereby gas can flow from the header chamber 5.1 to the space formed between the outer tube and the inner tube. The outer tube and the inner tube are preferably concentrically arranged in relation to each other.

Gas is caused to flow essentially downwards in the channel flow arrangement 5 in the space formed by outer tube 8.1 and its inner tube 9.1 thereof while transferring heat to the extent that condensation takes place in the gas. Heat is transferred basically through plain walls of the tubes. There is a space 5.3 arranged in connection with the second end of the outer tube and on the second side 2.2 of the shell flow arrangement 2. The first end of the inner tube 9.1 is connected with this space as well.

With this construction, the flow direction of the by now partly cooled gas is changed about 180° in space 5.3, whereby the condensed components and separated material from the exhaust gases are separated from the gas flow into space 5.3. Thus, a large amount of condensed water, and with it also detrimental components, can be separated from the exhaust gases. The space comprises at least one outlet conduit 11 for removing the liquid condensed from the gas. There preferably also is a gas lock 13 arranged in connection with the outlet conduit 11.

As the gas contains an elevated amount of condensable vapour, flow guides 12 have been arranged into the space for improving the separation of liquid by causing the flow of the second heat transfer medium to rotate around the longitudinal axis of the inner shell 9.1 and thereby to separate on the inner surface of the outer tube 8.1.

From the space 5.3, gas is arranged to flow essentially upwards in the space inside the inner tube 9.1. At this stage, the partially cooled gas is heated by the gas flowing countercurrently to it in the space between the outer tube 8.1 and the inner tube 9.1. Each outer tube 8.1 extends both to the first side 2.1 of the shell flow arrangement 2 and further through the first header chamber 5.1 and is connected to the second header chamber 5.2. The second header chamber 5.2 connects the flow of each outer tube 8.1 and directs the combined flow out to further treatment via conduit 10. The header chambers 5.1 and 5.2 are arranged side by side on the first side 2.1 of the shell flow arrangement, whereby the inlet and outlet of the hot gas takes place on the same side of the heat exchanger.

The outlet conduit 11 for the condensed water is preferably in flow connection with the water source 6.1 via channel 11.1, whereby at lest partly closed process is achieved as far as water is concerned. In that case, water source 6.1 preferably comprises suitable water cleaning apparatuses

The invention is not limited to the embodiments described here, but a number of modifications thereof can be conceived of within the scope of the appended claims.

## Claims

1. Heat exchanger arrangement (1.1), comprising a shell flow arrangement (2) for the first heat transfer medium, a channel flow arrangement (5) for a second heat transfer medium, arranged to be at least partially enveloped by the shell flow arrangement, in which the channel flow arrangement (5) comprises a first part (8) and a second part (9), in which the flow directions of the heat transfer medium are approximately opposite to each other, the first part (8) of the channel flow arrangement (5) comprising an outer shell (8.1) at least partially enveloped by the shell flow arrangement and the second part (9) comprises an inner shell (9.1) arranged at least partially inside the first part, in the arrangement a first header chamber (5.1) of the second heat transfer medium is arranged on the first side (2.1) of the shell flow arrangement (2), the header chamber comprising a medium inlet conduit (7) and the first part (8) of each channel flow arrangement is in flow connection with the first header chamber (5.1) by its first end, and a second header chamber (5.2) is additionally arranged on the first side (2.1) of the shell flow arrangement (2), the header chamber comprising an outlet conduit (10) for the medium and that the second part (9) of each channel flow arrangement is in flow connection with the second header chamber (5.2) by its second end, **characterized in that** a space (5.3) is arranged on the second side (2.2) of the shell flow arrangement (2), into which the first part (8) is connected by its second end and the second part (9) by its first end and that the space comprises at least one outlet conduit (11) for removing the liquid condensed from the heat transfer medium.

2. A heat exchanger arrangement (1.1) according to claim 1, **characterized in that** the first part (8) and the second part (9) are in flow connection with each other so that the second heat transfer medium can first flow via the first part and thereafter via the second part.

3. A heat exchanger arrangement (1.1) according to claim 1, **characterized in that** the first part (8) and the second part (9) consist of concentrically arranged tubes (8.1, 9.1), and that the channel flow arrangement (5) extends through the shell flow arrangement (2).

4. A heat exchanger arrangement (1.1) according to claim 1, **characterized in that** the shell flow arrangement (2) substantially envelopes the channel flow arrangement (5).

5. A heat exchanger arrangement (1.1) according to any of the preceding claims, **characterized in that** the channel flow arrangement (5) comprises a number of assemblies consisting of the first part (8) and the second part (9) connected in parallel.

6. A heat exchanger arrangement (1.1) according to claim 1, **characterized in that** the first (5.1) and second (5.2) header chambers are arranged side by side in relation to each other and that the second part (9) of each channel flow arrangement is arranged to extend through the first chamber (5.1).

7. A heat exchanger arrangement (1.1) according to any one of the claims 1
- 4, **characterized in that** flow guides (12) have been arranged in the space between the outer shell (8.1) and the inner shell (9.1) for causing the flow of heat transfer medium to rotate around the longitudinal axis of the inner shell (9.1).

8. A heat exchanger arrangement (1.1) according to any one of the preceding claims, **characterized in** the heat exchanger is connected to a piston engine (6)

9. A method of condensing condensable components from hot gases in a heat exchanger arrangement (1.1) according to any of claims 1 to 8, **characterized in that**
- hot gas is caused to flow essentially downwards in the channel flow arrangement (5) in the space formed by outer shell (8.1) and inner shell (9.1) thereof while exchanging heat through the shells to the extent that condensation takes place in the gas and that
- the flow direction of the already partially cooled is changed about 180°, whereby condensed components are separated from the gas flow
- gas is caused to flow essentially upwards in the space inside the inner shell (9.1), whereby it is simultaneously warmed by receiving heat from the hot gas.

10. A method according to claim 9, **characterized in that** hot gas is caused to flow essentially downwards in the channel flow arrangement (5), in the space formed by the outer shell and the inner shell thereof, simultaneously transferring heat with both the shell flow and the already partially cooled gas flow in the space inside the inner shell.

11. A method according to claim 9 or 10, **characterized in that** the hot gas is exhaust gas from a piston engine (6), whereby water is injected into the internal combustion engine as it is running and that the condensing components comprise water injected into the internal combustion engine unit.

12. A method according to claim 9 or 10, **characterized in that** gas is caused to flow essentially upwards in the space inside the inner shell (9.1) while receiving heat from the hot gas flowing essentially downwards in the channel flow arrangement (5), in the space formed by the outer shell (8.1) and inner shell (9.1) thereof.

13. A method according to claim 11, **characterized in that** amount of vapour condensed from the engine (6) exhaust gas is larger than the amount of water generated in the fuel combustion process.

## Patentansprüche

1. Wärmetauschereinrichtung (1.1), aufweisend eine Mantel-Strömungseinrichtung (2) für das erste Wärmeübertragungsmedium, eine Kanal-Strömungseinrichtung (5) für ein zweites Wärmeübertragungsmedium, das zumindest teilweise von der Mantel-Strömungseinrichtung eingehüllt ist, in welcher die Kanal-Strömungseinrichtung (5) ein erstes Teil (8) und ein zweites Teil (9) aufweist, in denen die Strömungsrichtungen des Wärmeübernagungsmediums nahezu zueinander entgegengesetzt verlaufen, wobei das erste Teil (8) der Kanal-Strömungseinrichtung (5) einen Außenmantel (8.1) aufweist, der zumindest teilweise durch die Mantel-Strömungseinrichtung eingehüllt ist, und das zweite Teil (9) einen Innenmantel (9.1) aufweist, der zumindest teilweise innerhalb des ersten Teils angeordnet ist, wobei in der Einrichtung eine erste Kopfkammer (5.1) des zweiten Wärmeübertragungsmediums auf der ersten Seite (2.1) der Mantel-Strömungseinrichtung (2) angeordnet ist, wobei die Kopfkammer einen Medium-Einlasskanal (7) aufweist und das erste Teil (8) einer jeden Kanal-Strömungseinrichtung in Strömungsverbindung mit der ersten Kopfkammer (5.1) an dessen erstem Ende steht, wobei ferner eine zweite Kopfkammer (5.2) zusätzlich auf der ersten Seite (2.1) der Mantel-Strömungseinrichtung (2) angeordnet ist, wobei die Kopfkammer eine Auslassleitung (10) für das Medium aufweist, und das zweite Teil (9) einer jeden Kanalströmungseinrichtung in Strömungsverbindung mit der zweiten Kopfkammer (5.2) durch dessen zweites Ende steht,
**dadurch gekennzeichnet, dass** ein Raum (5.3) auf der zweiten Seite (2.2) der Mantel-Strömungseinrichtung (2) angeordnet ist, in die das erste Teil (8) durch dessen zweites Ende und das zweite Teil (9) durch dessen erstes Ende angeschlossen ist, und dass der Raum mindestens eine Auslassleitung (11) zum Abscheiden der aus dem Wärmeübertragungsmedium kondensierten Flüssigkeit aufweist.

2. Wärmetauschereinrichtung (1.1) gemäß Anspruch 1,
**dadurch gekennzeichnet, dass** das erste Teil (8) und das zweite Teil (9) in Strömungsverbindung miteinander stehen, so dass das zweite Wärmeübertragungsmedium zunächst via dem ersten Teil und nachfolgend via dem zweiten Teil strömen kann.

3. Wärmetauschereinrichtung (1.1) gemäß Anspruch 1,
**dadurch gekennzeichnet, dass** das erste Teil (8) und das zweite Teil (9) aus konzentrisch angeordneten Rohren (8.1, 9.1) besteht, und dass die Kanal-Strömungseinrichtung (5) sich durch die Mantel-Strömungseinrichtung (2) erstreckt.

4. Wärmetauschereinrichtung (1.1) gemäß Anspruch 1,
**dadurch gekennzeichnet, dass** die Mantel-5trömungseinrichtung (2) im Wesentlichen die Kanal-Strömungseinrichtung (5) einhüllt.

5. Wärmetauschereinrichtung (1.1) gemäß einem der vorangehenden Ansprüche,
**dadurch gekennzeichnet, dass** die Kanal-Strömungseinrichtung (5) eine Anzahl von Baugruppen aufweist, die aus dem ersten Teil (8) und dem zweiten Teil (9) bestehen, die parallel angeschlossen sind.

6. Wärmetauschereinrichtung (1.1) gemäß Anspruch 1;
**dadurch gekennzeichnet, dass** die erste (5.1) und zweite (5.2) Kopfkammer zueinander Seite an Seite angeordnet sind, und dass das zweite Teil (9) einer jeden Kanalströmungseinrichtung sich durch die erste Kammer (5.1) erstreckt.

7. Wärmetauschereinrichtung (1.1) gemäß einem der vorangehenden Ansprüche 1 -4,
**dadurch gekennzeichnet, dass** Strömungsführungen (12) in dem Raum zwischen dem Außenmantel (8.1) und dem Innenmantel (9.1) vorgesehen sind, um die Strömung des Wärmeübertragungsmediums zur Rotation um die Längsachse des Innenmantels (9.1) zu bringen.

8. Wärmetauschereinrichtung (1.1) gemäß einem der vorangehenden Ansprüche,
**dadurch gekennzeichnet, dass** der Wärmetauscher an eine Kolbenmaschine (6) angeschlossen ist.

9. Verfahren zum Kondensieren kondensierbarer Bestandteile eines heißen Gases in einer Wärmetauschereinrichtung (1.1) gemäß einem der Ansprüche 1-8,
**dadurch gekennzeichnet, dass**
- heißes Gas veranlasst wird, im Wesentlichen abwärts in die Kanalströmungseinrichtung (5) in den Raum zu strömen, der durch den Außenmantel (8.1) und den Innenmantel (9.1) gebildet ist, während Wärme durch die Mäntel in einem Ausmaß übertragen wird, dass eine Kondensation in dem Gas stattfindet, und dass
- die Strömungsrichtung des bereits teilweise Gekühlten um 180° geändert wird, wobei kondensierte Bestandteile aus der Gasströmung separiert werden,
- und Gas veranlasst wird, im Wesentlichen aufwärts in den Raum innerhalb des Innenmantels (9.1) zu strömen, wobei es gleichzeitig durch Aufnahme von Wärme aus dem heißen Gas erwärmt wird.

10. Verfahren gemäß Anspruch 9,
**dadurch gekennzeichnet, dass** heißes Gas veranlasst wird, im Wesentlichen abwärts in die Kanalströmungseinrichtung (5) in den Raum zu strömen, der durch den Außenmantel und den Innenmantel hiervon gebildet ist, dass gleichzeitig Wärme mit sowohl der Mantelströmung und der bereits teilweise gekühlten Gasströmung in den Raum innerhalb des Innenmantels übertragen wird.

11. Verfahren gemäß Anspruch 9 oder 10,
**dadurch gekennzeichnet, dass** das heiße Gas ein aus einer Kolbenmaschine (6) stammendes Abgas ist, wobei Wasser in die Brennkraftmaschine während deren Laufs eingespritzt wird, und dass die kondensierenden Bestandteile Wasser umfassen, das in die Brennkraftmaschinem-Einheit eingespritzt wurde.

12. Verfahren gemäß Anspruch 9 oder 10,
**dadurch gekennzeichnet, dass** das Gas veranlasst wird, im Wesentlichen aufwärts in den Raum innerhalb des Innenmantels (9.1) zu strömen, während Wärme von dem heißen Gas aufgenommen wird, das im Wesentlichen abwärts in die Kanalströmungseinrichtung (5) strömt, und zwar in den Raum, der durch den Außenmantel (8.1) und dessen Innenmantel (9.1) gebildet ist.

13. Verfahren gemäß Anspruch 11,
**dadurch gekennzeichnet, dass** der Betrag an kondensiertem Dampf aus dem Maschinen- (6) Abgas größer ist als der Betrag an Wasser, das in dem Verbrennungsprozess generiert wurde.

## Revendications

1. Système d'échangeur thermique (1.1), comprenant un système de circulation à enveloppes (2) destiné au premier milieu caloporteur, un système de circulation à canaux (5) destiné à un second milieu caloporteur conçu pour être au moins partiellement enveloppé par le système de circulation à enveloppes, dans lequel le système de circulation à canaux (5) comporte une première partie (8) et une seconde partie (9), dans lequel les sens de circulation du milieu caloporteur sont approximativement opposés l'un à l'autre, la première partie (8) du système de circulation à canaux (5) comportant une enveloppe extérieure (8.1) enveloppée au moins partiellement par le système de circulation à enveloppes et la seconde partie (9) comporte une enveloppe intérieure (9.1) disposée au moins partiellement à l'intérieur de la première partie, dans le système une première chambre collectrice (5.1) du second milieu caloporteur est disposé sur la première face (2.1) du système de circulation à enveloppes (2), la chambre collectrice comprenant un conduit d'entrée de milieu (7) et la première partie (8) de chaque système de circulation à canaux est en communication de circulation avec la première chambre collectrice (5.1) par sa première extrémité, et une seconde chambre collectrice (5.2) est de plus disposée sur la première face (2.1) du système de circulation à enveloppes (2), la chambre collectrice comprenant un conduit de sortie (10) du milieu et que la seconde partie (9) de chaque système de circulation à canaux est en communication de circulation avec la seconde chambre collectrice (5.2) par sa seconde extrémité, **caractérisé par le fait que** un espace est (5.3) aménagé sur la seconde face (2.2) du système de circulation à enveloppes (2), dans lequel la première partie (8) est reliée par sa seconde extrémité et la seconde partie (9) par sa première extrémité et que l'espace comprend au moins un conduit de sortie (11) destiné à retirer le liquide condensé à partir du milieu caloporteur.

2. Système d'échangeur thermique (1.1) selon la revendication 1, **caractérisé par le fait que** la première partie (8) et la seconde partie (9) sont en communication de circulation l'une avec l'autre de telle sorte que le second milieu caloporteur peut d'abord circuler à travers la première partie puis à travers la seconde partie.

3. Système d'échangeur thermique (1.1) selon la revendication 1, **caractérisé par le fait que** la première partie (8) et la seconde partie (9) sont constituées de tubes agencés de manière concentrique (8.1, 9.1), et que le système de circulation à canaux (5) s'étend à travers le système de circulation à enveloppes (2).

4. Système d'échangeur thermique (1.1) selon la revendication 1, **caractérisé par le fait que** le système de circulation à enveloppes (2) enveloppe essentiellement le système de circulation à canaux (5).

5. Système d'échangeur thermique (1.1) selon l'une quelconque des revendications précédentes, **caractérisé par le fait que** le système de circulation à canaux (5) comprend un certain nombre d'assemblages constitué de la première partie (8) et de la seconde partie (9) reliées en parallèle.

6. Système d'échangeur thermique (1.1) selon la revendication 1, **caractérisé par le fait que** la première (5.1) et la seconde (5.2) chambres collectrices sont disposées côte à côte l'une par rapport à l'autre et que la seconde partie (9) de chaque système de circulation à canaux est prévue de manière à s'étendre à travers la première chambre (5.1).

7. Système d'échangeur thermique (1.1) selon l'une quelconque des revendications 1 à 4, **caractérisé par le fait que** des guides de circulation (12) ont été disposés dans l'espace situé entre l'enveloppe extérieure (8.1) et l'enveloppe intérieure (9.1) afin d'entraîner en rotation la circulation du milieu caloporteur autour de l'axe longitudinal de l'enveloppe intérieure.

8. Système d'échangeur thermique (1.1) selon l'une quelconque des revendications précédentes, **caractérisé par le fait que** l'échangeur de chaleur est relié à un moteur à pistons (6).

9. Procédé de condensation d'éléments condensables à partir de gaz chauds dans un système d'échangeur thermique (1.1) selon l'une quelconque des revendications 1 à 8, **caractérisé par le fait que**
- du gaz chaud est entraîné en circulation essentiellement vers le bas dans le système de circulation à canaux (5), dans l'espace formé par l'enveloppe extérieure et l'enveloppe intérieure dudit système tout en effectuant un échange de chaleur à travers les enveloppes de telle manière que la condensation se fasse dans le gaz et que
- le sens de circulation du gaz déjà partiellement refroidi a changé d'environ 180°, les éléments condensés étant séparés de la circulation du gaz
- du gaz est entraîné en circulation essentiellement vers le haut dans l'espace situé à l'intérieur de l'enveloppe intérieure (9.1), étant simultanément chauffé en recevant de la chaleur provenant du gaz chaud.

10. Procédé selon la revendication 9, **caractérisé par le fait que** du gaz chaud est entraîné en circulation essentiellement vers le bas dans le système de circulation à canaux (5), dans l'espace formé par l'enveloppe extérieure et l'enveloppe intérieure dudit système, transférant simultanément la chaleur avec et la circulation à canaux et la circulation de gaz déjà partiellement refroidi dans l'espace situé à l'intérieur de l'enveloppe.

11. Procédé selon la revendication 9 ou 10, **caractérisé par le fait que** le gaz chaud est du gaz d'échappement provenant d'un moteur à pistons (6), de l'eau étant injectée dans le moteur à combustion interne pendant qu'il est en service et que les éléments de condensation comportent de l'eau injectée dans l'unité de moteur à combustion interne.

12. Procédé selon la revendication 9 ou 10, **caractérisé par le fait que** du gaz est entraîné en circulation essentiellement vers le haut dans l'espace situé à l'intérieur de l'enveloppe intérieure (9.1) tout en recevant de la chaleur provenant du gaz chaud circulant essentiellement vers le bas dans le système de circulation à canaux (5), dans l'espace formé par l'enveloppe extérieure (8.1) et l'enveloppe intérieure (9.1) dudit système.

13. Procédé selon la revendication 11, **caractérisé par le fait que** la quantité de vapeur condensée provenant du gaz d'échappement du moteur (6) est plus importante que la quantité d'eau générée dans le procédé de combustion de combustible.
